# DEMANDE DE BREVET EUROPEEN

(11) **EP 2 393 174 A1**
(43) Date de publication de la demande: **07.12.2011**
(21) Numéro de dépôt: 11290206.9
(22) Date de dépôt: 28.04.2011
(51) Int. Cl.: H02G 3/08

(54) **Coffret pour appareillage électrique dont le fond comporte une partie mobile réglable en hauteur**

(30) Priorité: 04.06.2010 FR 1002377
(71) Demandeur: Legrand France, 87000 Limoges (FR)
(72) Inventeur: Bonnaud Nicolas, 87100 Limoges (FR); Auvray Chistophe, 87240 Saint Sylvestre (FR)
(74) Mandataire: Orsini, Fabienne

(57) **Abrégé**

L'invention concerne un coffret (1) pour appareillages électriques comportant un fond (300), à partir duquel s'élève une paroi latérale (200) entourant ce fond.

Selon l'invention, ledit fond comporte au moins une partie fixe (310) rattachée fixement à ladite paroi latérale et une partie mobile (320) en translation selon une direction perpendiculaire à ladite partie fixe, entre une première position dans laquelle ladite partie mobile s'étend dans le prolongement de ladite partie fixe et une deuxième position dans laquelle ladite partie mobile s'étend en retrait de ladite partie fixe.

## Description

La présente invention concerne un coffret pour appareillage électrique comportant un fond, à partir duquel s'élève une paroi latérale entourant ce fond.

Elle trouve une application particulièrement avantageuse pour la réalisation de coffrets destinés à accueillir des appareillages électriques montés sur des rails de manière à être disposés sous la forme de rangées dans ce coffret.

### ARRIÈRE-PLAN TECHNOLOGIQUE

On connaît déjà notamment des documents FR2888681 et FR2888680 des coffrets pour appareillages électriques du type précité dans lesquels la paroi latérale comporte une partie fixe et une partie mobile coulissant sur cette partie fixe.

Dans le coffret du document FR2888681, la partie fixe de cette paroi latérale est rattachée au fond du coffret, tandis que dans le coffret décrit par le document FR2888680, c'est la partie mobile de la paroi latérale qui est rattachée au fond du coffret.

Il est donc possible dans ces deux types de coffrets d'ajuster la hauteur de la paroi latérale de manière à régler la profondeur du coffret.

Cependant, la mise en oeuvre de ces dispositifs est relativement longue et complexe.

En outre, il est alors nécessaire de rattacher les rails de montage des appareillages électriques respectivement à la partie mobile ou à la partie fixe de la paroi latérale, ce qui limite les possibilités de montage de ces appareillages.

### OBJET DE L'INVENTION

Afin de remédier aux inconvénients précités de l'état de la technique, la présente invention propose un nouveau coffret électrique autorisant un réglage simplifié de sa profondeur dans lequel les possibilités de montage des appareillages électriques ne sont pas limitées.

Plus particulièrement, l'invention propose un coffret tel que décrit dans la revendication 1.

Ainsi, le fond est agencé de manière à ce que, dans la première position, la face avant de la partie mobile de ce fond, tournée vers l'ouverture avant du coffret, s'étend sensiblement dans le même plan que la face avant de la partie fixe du fond et, dans la deuxième position, cette face avant de la partie mobile est décalée dans la direction de translation par rapport à la face avant de la partie fixe, de manière à former un renfoncement dans le fond du coffret.

La partie mobile du fond est ainsi réglable en hauteur de manière rapide et facile.

Les rails de montage des appareillages électriques peuvent en outre être rattachés de manière classique à la paroi latérale du coffret. Ils peuvent également éventuellement être rattachés à la partie mobile du fond : les possibilités d'aménagement du coffret sont ainsi enrichies.

D'autres caractéristiques avantageuses et non limitatives du coffret selon l'invention sont décrites dans les revendications 2 à 10.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue en perspective avant d'un coffret selon l'invention, dans lequel la partie mobile du fond est disposée en retrait de sa partie fixe ;
- la figure 2 est une vue en perspective avant du coffret de la figure 1, dans lequel la partie mobile du fond est disposée dans le prolongement de sa partie fixe ;
- la figure 3 est une vue en perspective arrière du coffret de la figure 1 ;
- la figure 4 est une vue en perspective arrière du coffret de la figure 2 ;
- la figure 5 est une vue en coupe d'un détail du coffret de la figure 2 selon le plan A-A de cette figure, avec un arraché partiel de la paroi latérale du coffret, dans lequel les moyens de liaison mécanique à crémaillère entre la partie mobile du fond et la paroi latérale du coffret sont dans une position de blocage du mouvement de la partie mobile par rapport à la partie fixe ;
- la figure 6 est une vue selon une coupe similaire à celle de la figure 5, du coffret de cette figure dans lequel les moyens de liaison mécanique à crémaillère sont dans une position de libération du mouvement de la partie mobile par rapport à la partie fixe ;
- la figure 7 est une vue en coupe d'un détail du coffret de la figure 1 selon le plan B-B de cette figure, dans lequel les moyens de liaison mécanique à crémaillère sont dans une position de libération du mouvement de la partie mobile par rapport à la partie fixe ;
- la figure 8 est une vue selon une coupe similaire à celle de la figure 7 du coffret de cette figure, dans lequel les moyens de liaison mécanique à crémaillère sont dans une position de blocage du mouvement de la partie mobile par rapport à la partie fixe ;
- la figure 9 est une vue en perspective d'une position de montage du taquet des moyens de liaison mécanique à crémaillère dans la paroi latérale du coffret ;
- la figure 10 est une vue en coupe de la paroi latérale du coffret de la figure 5 selon le plan P1 de cette figure dans laquelle le taquet est coupé suivant le plan de l'une des faces de la partie interne de la paroi latérale, avec un arraché partiel de la partie externe de la paroi latérale du coffret ;
- la figure 11 est une vue agrandie similaire à celle de la figure 10 du coffret de cette figure dans lequel on a représenté la languette coopérant avec le taquet ;
- la figure 12 est une vue similaire à la vue de la figure 11, dans laquelle le taquet est dans sa position de blocage, en coopération avec ladite languette ;
- les figures 13 et 14 sont des vues arrière en coupe selon le plan P2 des figures 11 et 12 ;
- les figures 15 et 16 sont des vus similaires à celles des figures 11 et 12 sans coupe du taquet suivant le plan de l'une des face de la partie interne de la paroi latérale.

Dans l'ensemble de la description, on désignera par le terme « hauteur » une distance mesurée selon une direction perpendiculaire à la partie fixe du fond du coffret.

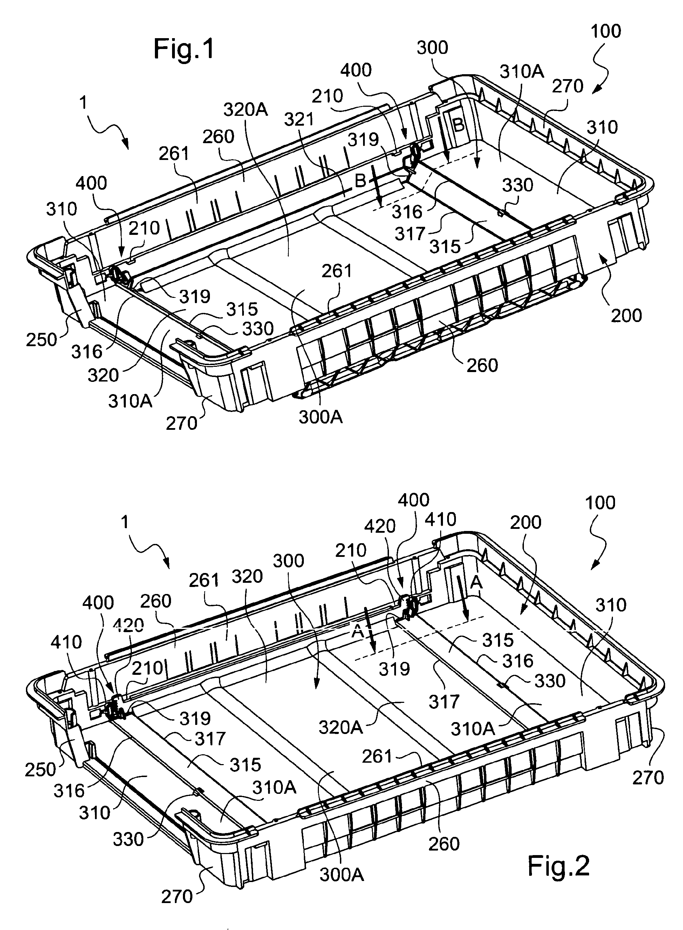

On a représenté sur les figures 1 à 4 un mode de réalisation préférentiel du coffret 1 conforme à l'invention.

Ce coffret 1 est un coffret pour appareillages électriques, destiné à accueillir des appareillages électriques (non représentés) montés sur des rails parallèles (non représentés), de manière à être disposés sous la forme de rangées.

Ce coffret 1 comporte à l'arrière un socle 100 ouvert à l'avant et un capot (non représenté) qui ferme l'ouverture de ce socle 100.

Le capot coiffe les appareillages électriques de manière à éviter, par mesure de sécurité, qu'un accès aux parties câblées de ces appareillages électriques soit possible de manière fortuite. Seules les parties de manoeuvre de ces appareillages électriques, qu'il est nécessaire de laisser accessible à l'usager, émergent du capot à la faveur de fenêtres ouvertes dans ce capot.

Le socle 100 comprend un fond 300, à partir duquel s'élève une paroi latérale 200 entourant ce fond 300.

Plus précisément, la paroi latérale 200 s'élève ici perpendiculairement au fond 300 et borde ce fond 300 (figures 1 à 4).

Dans l'exemple représenté sur les figures, le coffret 1 présentent une forme globalement parallélépipédique.

Le fond 300 du socle 100 présente ici une forme rectangulaire. En variante, le fond pourrait présenter une forme carrée.

La paroi latérale 200 de ce socle 100 comporte en conséquence deux côtés opposés de plus petite longueur appelés ici côtés transverses 270 et deux côtés opposés de plus grande longueur appelés ici côtés longitudinaux 260.

La paroi latérale 200 peut comporter dans un ou plusieurs de ses côtés, une ouverture 250 permettant l'introduction de câbles d'alimentation pour raccorder électriquement les appareillages électriques logés dans le coffret 1 à un réseau électrique (figures 1 à 4). Ces ouvertures 250 sont de préférence prévues dans l'un ou l'autre des côtés transverses 270 de la paroi latérale 200, de manière à être orientées vers le haut ou vers le bas du coffret 1 lorsque celui-ci est installé dans sa paroi de montage.

De manière remarquable, le fond 300 du socle 100 du coffret 1 comporte au moins une partie fixe 310 rattachée fixement à ladite paroi latérale 200 et une partie mobile 320 en translation selon une direction perpendiculaire à ladite partie fixe 310, entre une position dans laquelle ladite partie mobile 320 s'étend dans le prolongement de ladite partie fixe 310, comme le montrent les figures 2, 4, 5 et 6, et une deuxième position dans laquelle ladite partie mobile 320 s'étend en retrait de ladite partie fixe 310, comme le montrent les figures 1, 3, 7, 8, 9 et 11 à 16.

Les parties fixes 310 et mobile 320 du fond 300 forment ensemble une paroi de fermeture 300A qui ferme l'arrière du socle 100 (voir notamment les figures 1 à 4).

La partie mobile 320 du fond 300 comporte en outre un muret 321 qui établit une jonction entre cette paroi de fermeture 310, 320 et la paroi latérale 200 du socle 100 (figures 1, 2, 5 à 9 et 11 à 16).

Plus particulièrement, le fond 300 comporte ici deux parties fixes 310 rattachées fixement à deux portions opposées de la paroi latérale 200.

Chacune de ces parties fixes 310 du fond 300 se présente sous la forme d'une plaque rectangulaire 310A rattachée à l'un des côtés transverses 270 et à une partie des côtés longitudinaux 260 (voir figures 1 et 2) de la paroi latérale 200 du socle 100.

Dans l'exemple représenté sur les figures, les parties fixes 310 présentent des dimensions similaires.

La partie mobile 320 du fond 300 est ainsi centrale et s'étend d'une part, entre les parties fixes 310 du fond 300 et, d'autre part, entre les côtés longitudinaux 260 de la paroi latérale 200 (figures 1 et 2).

Cette partie mobile 320 comporte une plaque rectangulaire 320A bordée par le muret 321 sur ses deux côtés opposés adjacents aux cotés longitudinaux 260 de la paroi latérale 200, comme le montrent les figures 1, 2 et 5 à 9.

Ce muret 321 s'élève perpendiculairement à cette plaque rectangulaire 320A et coulisse contre une face interne 261 (figures 1, 2 et 9) du côté longitudinal 260 correspondant de la paroi latérale 200.

Le muret 261 présente une hauteur supérieure ou égale à l'écart maximal possible entre la partie mobile 320 et la partie fixe 310. Cet écart maximal possible sera défini plus précisément par la suite.

Ainsi, aucun espace libre n'est laissé entre la paroi latérale 200 et la partie mobile 320 du fond 300. Le coffret 1 reste ainsi parfaitement isolé et la sécurité électrique de l'installation est assurée.

Lorsque la partie mobile 320 s'étend dans le prolongement des parties fixes 310, la face avant (tournée vers l'avant du socle) de la plaque rectangulaire 320A de la partie mobile 320 s'étend sensiblement dans le même plan que la face avant des plaques rectangulaires 310A formant les parties fixes 310 du fond 300, de manière à ce que la paroi de fermeture 300A du socle 100 soit globalement plane (figures 1, 2, 5 et 6). La profondeur du coffret est alors constante sur toute sa longueur et égale à la hauteur de la paroi latérale 200. Cette position de la partie mobile 320 sera appelée dans la suite position de fond plan.

Dans la position de retrait de la partie mobile 320, celle-ci forme un renfoncement vers l'arrière dans le fond 300 du socle 100 du coffret 1 de manière à augmenter localement, au niveau de ladite partie mobile 320, la profondeur du coffret 1.

Avantageusement, la partie mobile 320 du fond 300 est montée mobile en translation sur la paroi latérale 200 et sur les parties fixes 310 du fond 300 du socle 100.

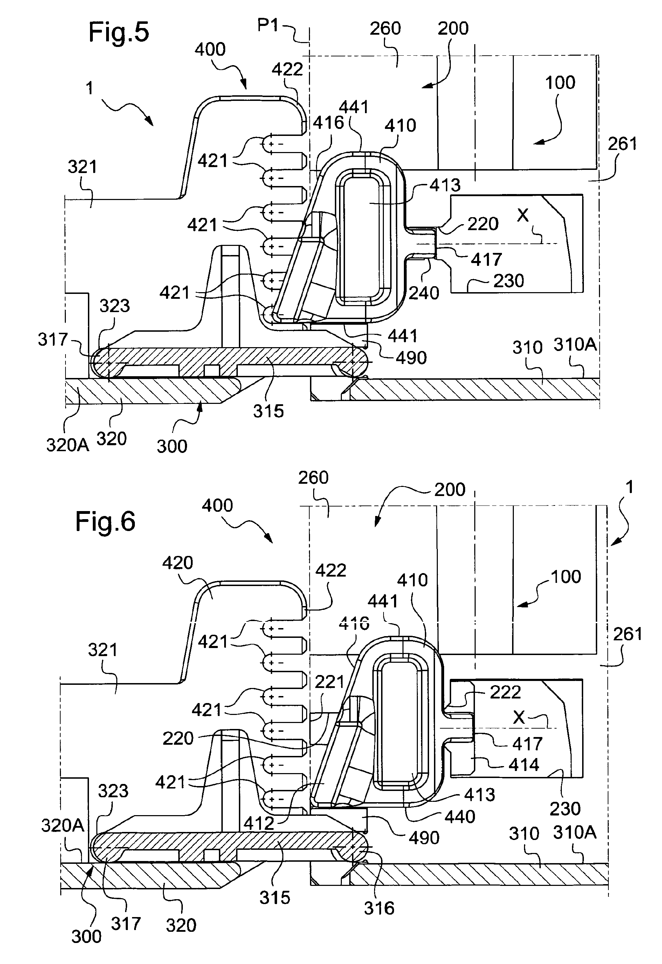

Il est notamment prévu des moyens de liaison mécanique à crémaillère 400 (voir notamment les figures 5 à 9) entre cette partie mobile 320 du fond 300 et la paroi latérale 200 du coffret 1 ainsi que deux éléments de jonction 315 (figures 1, 2 et 5 à 9) entre la partie mobile 320 et les parties fixes 310 du fond 300.

Les moyens de liaison mécanique à crémaillère 400 comportent ici quatre couples de languettes 420 et de taquets 410 qui sont adaptés à coopérer à retenue dans différentes positions autorisant le blocage de la partie mobile 320 du fond 300 à différentes hauteurs par rapport à la partie fixe 320 du fond 300 du socle 100.

Plus particulièrement, les languettes 420 s'élèvent à partir de la plaque rectangulaire 320A de la partie mobile 320 du fond 300, perpendiculairement à celle-ci, à chaque coin de cette plaque rectangulaire 320A (figures 5 à 9).

Les languettes 420 s'étendent parallèlement à la paroi latérale 200 du socle 100 voisine, en débord de la plaque rectangulaire 320A de la partie mobile, en direction de la partie fixe 310 voisine.

Les languettes 420 sont ici formées par les extrémités longitudinales de chaque muret 321.

Chaque languette 420 comporte une pluralité d'encoches 421 disposées à différentes hauteurs par rapport à la plaque rectangulaire 320A de ladite partie mobile 320 du fond 300 et qui s'étendent parallèlement à celle-ci (figures 5 à 9 et 11 à 16).

Ces encoches 421 débouchent sur la tranche 422 de la languette 420 qui fait face au taquet 410 correspondant.

Cette tranche 422 de la languette 420 correspond ici à la tranche de l'une des extrémités longitudinales du muret 321 correspondant.

Les encoches 421 des deux languettes 420 situées aux deux extrémités longitudinales d'un même muret 321 s'ouvrent donc dans des directions opposées.

L'écart entre les deux encoches 421 les plus éloignées sur chaque languette 420 représente l'écart maximal possible entre la partie mobile 320 et chaque partie fixe 310 du fond 300.

Comme le montrent les figures 5 à 8 et 11 à 16, le taquet 410 associé à chaque languette 420 est monté à coulissement sur la paroi latérale 200, dans une fente 220 (figures 5 à 16) de cette paroi latérale 200, de manière à être disposée en regard du débouché des encoches 421 de la languette 420 correspondante.

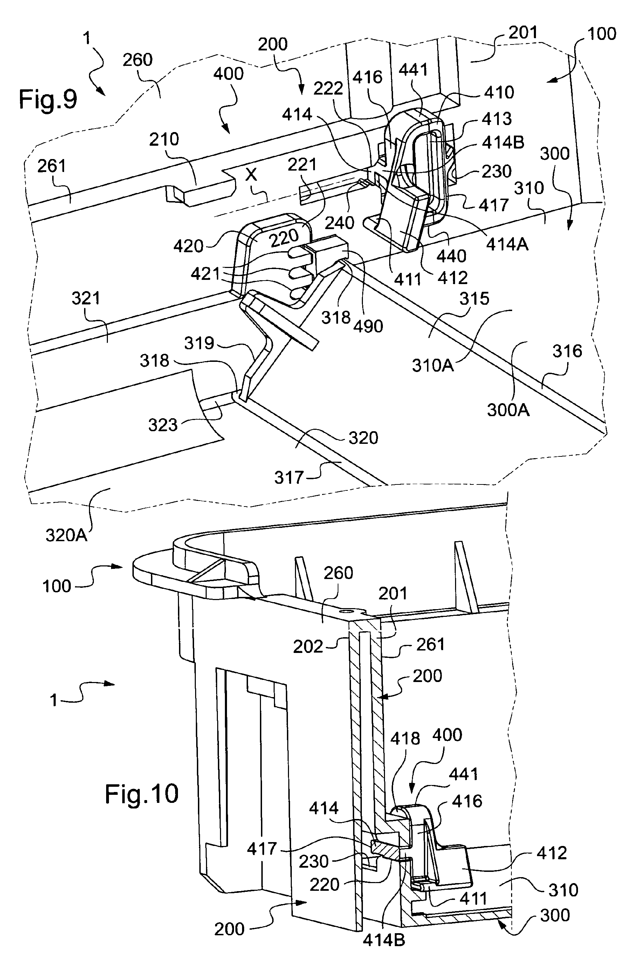

Chaque taquet 410 comporte un corps de forme globalement parallélépipédique avec une face interne 418 (figures 10 à 16) tournée vers la paroi latérale 200 du socle 100 du coffret 1 et qui s'étend parallèlement à cette paroi latérale 200, une face externe 413 (figures 5 à 9) opposée à cette face interne 418, une face de coopération 416 (figures 5 à 16) tournée vers la languette 420 correspondante, et une face latérale 417 (figures 5 à 9) opposée à la face de coopération 416. Une face inférieure 440 du taquet 410 est tournée vers le fond 300 du socle 100 et opposée à une face supérieure 441 (voir notamment figures 5 à 9).

Comme le montre plus particulièrement les figures 9, 10, 12, 14 et 16, à partir de la face de coopération 416 du taquet 410, une dent 411 fait saillie en direction de la languette 420 correspondante, parallèlement à chacune des plaques rectangulaires 310A, 320A des parties fixes 310 et mobile 320 du fond 300.

Cette dent 411 s'étend donc parallèlement à chaque encoche 421 de la languette 420 correspondante.

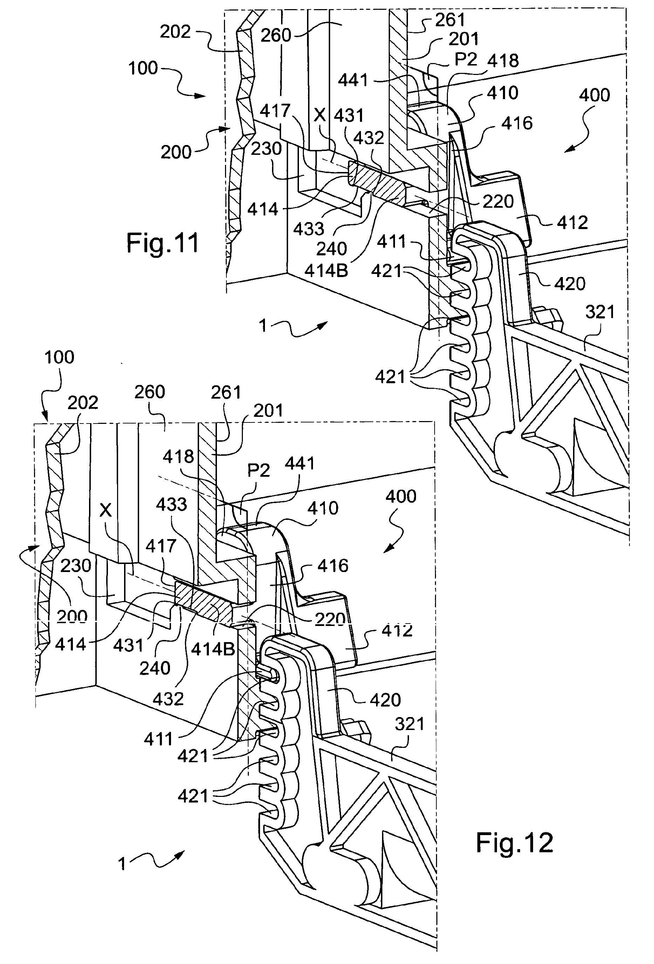

Elle présente en outre des dimensions parfaitement adaptées, à un jeu près, à son introduction dans chacune des encoches 421 de la languette 420 lorsque le taquet 410 coulisse vers la languette 420 correspondante, comme cela est représenté sur les figures 12, 14 et 16.

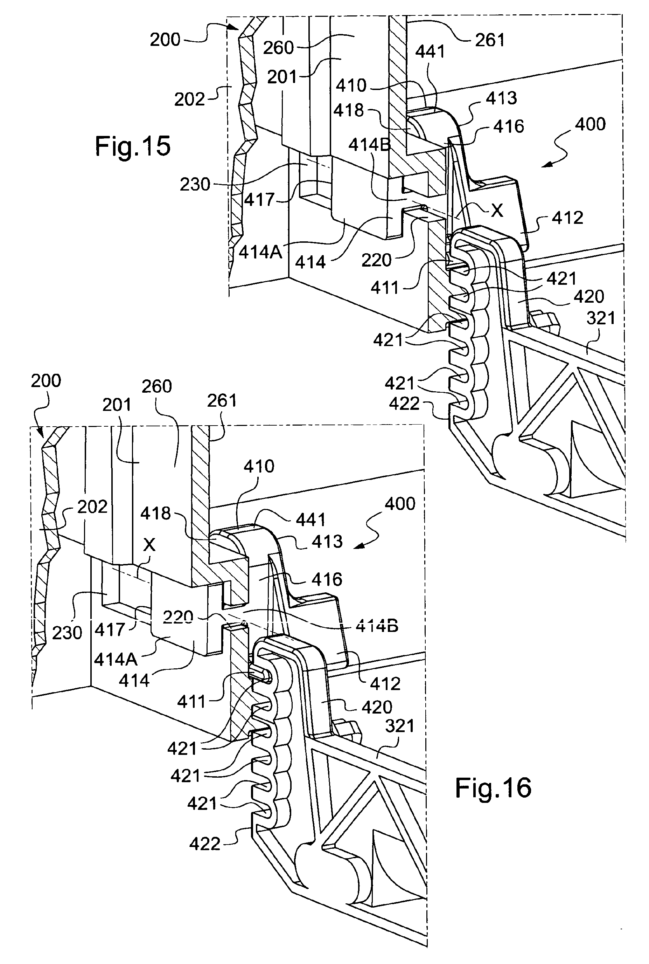

Comme représenté plus particulièrement sur les figures 15 et 16, chaque taquet 410 comporte, pour son montage dans la fente 220, un élément 414 en forme de T comportant une jambe 414B qui s'étend à partir de sa face interne 418, perpendiculairement à celle-ci, et une tête 414A qui s'étend parallèlement à cette face interne 418 du taquet 410.

La jambe 414B de cette élément 414 en forme de T traverse ladite fente 220 (figures 11 à 16) ouverte dans la paroi latérale 200.

Plus précisément, la jambe 414B traverse ici une paroi interne 201 de la paroi latérale 200.

Comme représenté plus particulièrement sur la figure 10 et les figures 11, 12, 15 et 16, la paroi latérale 200 comporte ici en effet une doubie paroi : elle est composée de la paroi interne 201 orientée vers l'intérieur du coffret 1 et une paroi externe 202 orientée vers l'extérieur du coffret 1.

Cependant, le socle 100 du coffret 1 selon l'invention peut ne comporter qu'une paroi latérale simple, équivalente à la paroi interne 201 de la paroi latérale 200 représentée dans l'exemple des figures.

La fente 220 présente une hauteur adaptée, à un jeu près, à celle de la jambe 414B de cette élément 414 en forme de T.

La tête 414A de cet élément en forme de T et le corps du taquet 410 s'étendent chacun d'un côté de la paroi interne 201 (voir figures 15 et 16) de la paroi latérale 200, de telle sorte que le taquet 410 se trouve à cheval sur cette paroi interne 201 de la paroi latérale 200.

La face interne 418 du taquet 410 et la tête 414A de l'élément 414 en forme de T sont plaquées, à un jeu près, contre les faces opposées de cette paroi interne 201.

La tête 414A de l'élément en T, située d'un côté de la paroi interne 201, et le corps du taquet 410, situé de l'autre côté de la paroi interne 201, présentent des hauteurs supérieures à celle de la fente 220, de sorte que tout mouvement du taquet 410 dans une direction perpendiculaire à la paroi interne 201 est bloqué.

Chaque taquet 410 ne peut coulisser dans la fente 220 correspondante que selon un axe longitudinale X de celle-ci (voir figures 5 à 8 et 11 à 16).

Cet axe longitudinal X de la fente 220 de la paroi latérale 200 s'étend parallèlement aux plaques rectangulaires 310A, 320A des parties fixes 310 et mobile 320 du fond 300.

Chaque fente 220 présente une extrémité 221 longitudinale disposée à proximité de la languette 420 correspondante, et débouche à son autre extrémité 222 longitudinale sur une fenêtre 230 de la paroi interne 201 de la paroi latérale 200 présentant des dimensions supérieures à celle de la fente 220 (voir notamment les figures 5 à 16).

L'extrémité 221 de chaque fente 220 est visible en particulier sur la figure 9 présentant le taquet 410 dans une position de montage.

La fenêtre 230 autorise, comme représenté sur la figure 9, le montage du taquet 410 sur la paroi latérale 200 : l'élément 414 en forme de T du taquet 410 est introduit à travers cette fenêtre 230 et la jambe 414B de cet élément 414 en forme de T est ensuite poussée dans la fente 220.

Des pans inclinés qui bordent l'extrémité 222 de la fente 220 au débouché dans ia fenêtre 230 facilitent ie guidage du taquet 410 dans la tente 220 lors de ce montage (figures 5 à 9 et 11 à 13).

Une fois monté dans la fente 220, le taquet 410 n'en sort plus, comme cela sera expliqué en détail plus loin.

Chaque taquet 410 coulisse dans la fente 220 correspondante entre une position de blocage (figures 5, 8, 12, 14 et 16), dans laquelle il coopère à retenue avec la languette 420 correspondante de la partie mobile 320 du fond 300 pour bloquer celle-ci à une hauteur variable par rapport à la partie fixe 310 du fond 300, et une position de libération (figures 6, 7, 11, 13 et 15) de la languette 420, dans laquelle la partie mobile 320 du fond peut être librement déplacée en translation entre sa position de fond plan et sa position de retrait.

Plus précisément, dans la position de blocage du taquet 410 (figures 5, 8, 10, 12, 14 et 16), la dent 411 de celui-ci est engagée dans l'une des encoches 421 de la languette 420 correspondante. Tout mouvement de la partie mobile 320 du fond 300 est alors empêché.

Dans la position de libération du taquet 410 (figures 6, 7, 8, 11, 13, 15), la dent 411 est dégagée de l'encoche de la languette 420. Lorsque les quatre taquets 410 sont dans leur position de libération, la partie mobile 320 du fond 300 est alors libre de se déplacer en translation selon la direction perpendiculaire à cette partie mobile 320 et aux parties fixes 310 du fond 300.

Le coulissement de chaque taquet 410 dans la fente 220 correspondante est limité dans les deux sens par la butée d'un cran 240 situé sur l'une des faces de la fente 220 sur des parois de butée 431, 432 de la jambe 414B du taquet 410 qui traverse la fente 220 (figure 11 à 14).

Dans l'exemple représenté sur les figures, la face de la fente 220 qui est située la plus proche du fond 300 du socle 100 comporte, à proximité de l'extrémité 222 de cette fente 220 qui débouche sur la fenêtre 230, le cran 240 qui se présente sous la forme d'une arête s'étendant perpendiculairement à l'axe longitudinal X de cette fente 220.

La jambe 414B de l'élément 414 en forme de T du taquet 410 comporte, dans sa face tournée vers la face de la fente 220 qui comporte l'arête 240, une rainure 433 dont les parois latérales 431, 432 forment lesdites parois de butée 431,432.

Lors du montage du taquet 410 sur la paroi latérale 200, celui-ci est introduit dans la fente 220 par passage du point dur formé par le cran 240.

Une fois le taquet 410 monté sur la paroi latérale 200, le cran 240 reste logé dans la rainure 433 du taquet 410, et le taquet 410 ne peut donc pas être sorti de la fente 220.

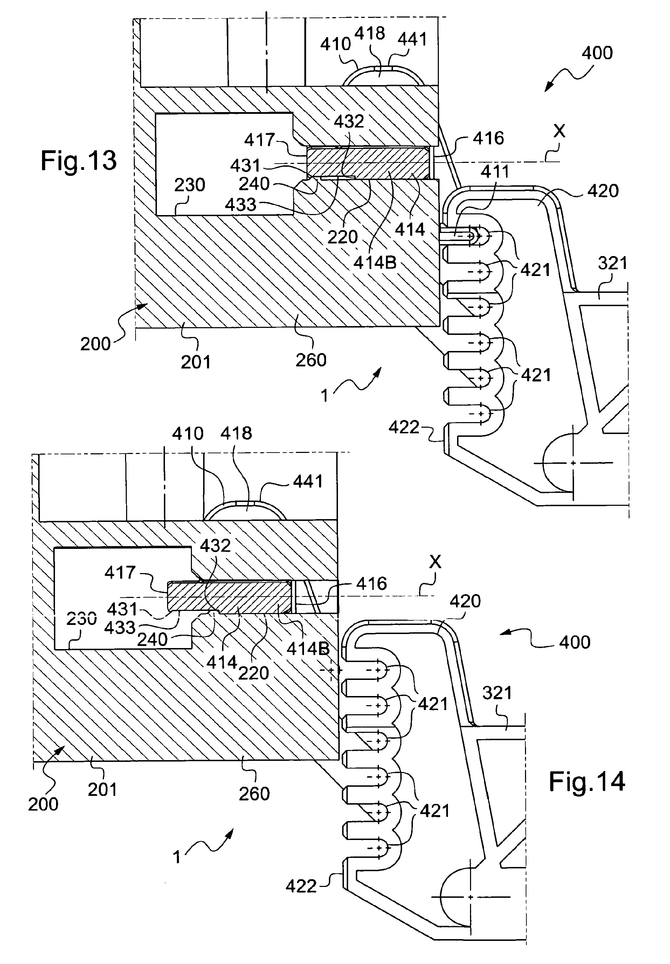

Lorsque le taquet 410 se trouve dans la position de blocage de la partie mobile 320 du fond 300, comme représenté sur les figures 12 et 14, le cran 240 est en butée contre l'une 431 des parois latérales de la rainure 433 et lorsque le taquet 410 se trouve dans sa position de libération, comme représenté sur les figures 11 et 13, le cran 240 est en butée contre l'autre paroi latérale 432 de la rainure 433.

Par ailleurs, chaque taquet 410 comporte un élément de préhension 412 qui s'étend à partir de sa face externe 413 accessible à l'utilisateur, permettant à l'utilisateur de faire coulisser facilement ce taquet 410 dans la fente 220.

Le guidage de chaque taquet 410 est également facilité par la présence d'un bloc 490 qui s'étend perpendiculairement à la paroi latérale 200 du socle 100, vers l'intérieur du coffret 1, entre le taquet 410 et la partie fixe 310 du fond 300.

La face inférieure 440 du taquet 410 repose contre la face supérieure de ce bloc 490 qui s'étend parallèlement à ladite partie fixe 310 du fond 300.

Le coulissement du taquet 410 est ainsi guidé précisément et la dent 411 du taquet 410 s'engage et se dégage facilement de sa coopération avec l'une des encoches 421 de la languette 420.

La partie mobile 320 du fond 300 est également liée à chaque partie fixe 310 du fond 300 et à la paroi latérale 200 par l'intermédiaire d'un élément de jonction 315.

Chaque élément de jonction 315 recouvre en permanence au moins les bords libres des plaques rectangulaires 310A, 320A des parties fixes 310 et mobile 320 du fond 300, de manière à assurer la continuité de la plaque de fermeture 300A du socle 100.

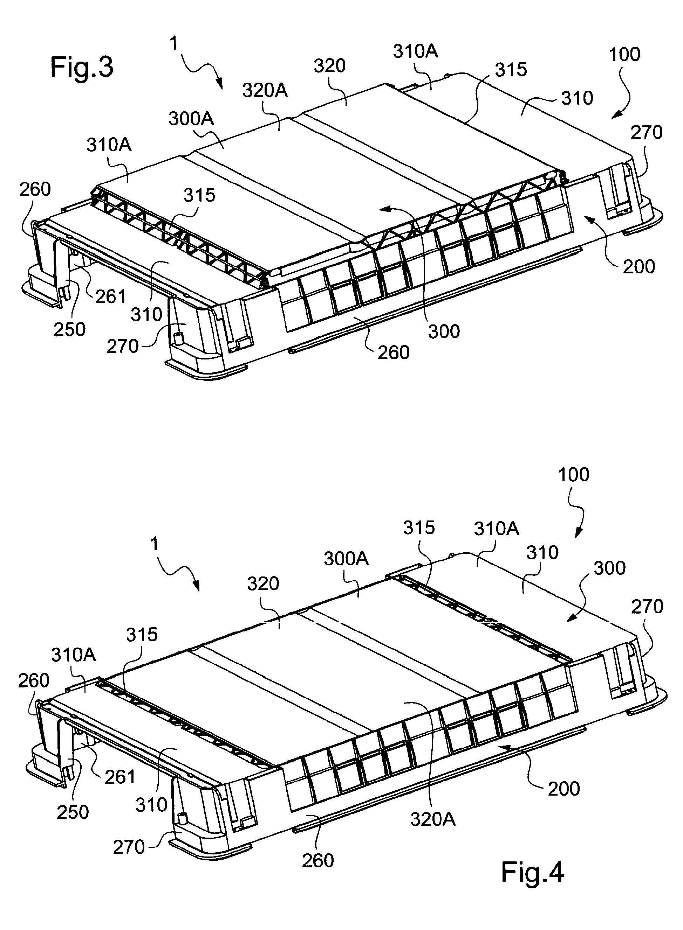

Comme le montrent en particulier les figures 3 à 8, ces bords libres des plaques rectangulaires 310A, 320A ne sont pas jointifs, ce qui facilite le mouvement de translation de la partie mobile 320.

Grâce aux éléments de jonction 315 qui ferment en permanence l'espace ouvert entre ces bords libres, quelle que soit la position relatives des parties fixes 310 et mobile 320 du fond, l'isolation du coffret 1 et donc la sécurité électrique de l'installation est garantie.

Chaque élément de jonction 315 se présente sous la forme d'une plaquette rectangulaire de forme allongée avec deux bords longitudinaux 316 opposées et deux bords latéraux 319 opposés.

L'un 316 des deux bords longitudinaux de l'élément de jonction 315 est liée à ladite partie fixe 310 du fond 300 et à la paroi latérale 200 par un mécanisme de charnière, tandis que l'autre bord longitudinal 317 comporte des moyens de coopération avec une coulisse 323 de la partie mobile 320 du fond 300 (voir notamment les figures 1, 2 et 9).

Plus précisément, les bords longitudinaux 316, 317 de chaque élément de jonction 315 présentent une forme arrondie (visible notamment sur les vues en coupe des figures 5 à 8) et sont prolongés longitudinalement par des pions 318 (voir figure 9).

Ces pions 318 présentent de préférence un contour arrondi pour faciliter le mouvement relatif de l'élément de jonction 315 et des parties mobiles et fixes du fond 300. Ils ont ici une forme cylindrique.

Les pions 318 qui prolongent le bord longitudinal 317 de chaque élément de jonction 315 coopérant avec la partie mobile 320 du fond 300 sont reçus chacun dans la coulisse 323 correspondante de cette partie mobile 320 (figures 5 à 9).

Cette coulisse 323 est ménagée dans le muret 321 de la partie mobile 320 du fond 300, le long de la plaque rectangulaire 320A de cette partie mobile 320 et parallèlement à celle-ci.

Les dimensions de cette coulisse 323 s'adaptent à un jeu près aux dimensions de chaque pion 318 et au débattement maximal de ce pion 318 au cours du mouvement de l'élément de jonction 315 entraîné par le déplacement de la partie mobile 320 du fond 300 entre sa position de fond plan et sa position de retrait.

Les pions 318 qui prolongent le bord longitudinal 316 de chaque élément de jonction 315 coopérant avec la partie fixe 310 du fond 300 sont reçus chacun dans un logement de réception formé par le bloc 490, dont une face supérieure guide le coulissement du taquet 410, et par la partie fixe 310 du fond 300 (figures 5 à 9).

La partie fixe 310 du fond 300 comporte également de préférence, le long de son bord libre qui coopère avec le bord longitudinal 316 de l'élément de jonction 315, au moins un moyen de réception 330 de ce bord longitudinal 316 (figures 1 et 2).

Ce moyen de réception 330 est ici disposé à proximité du milieu du bord libre de la partie fixe 310. Il permet de maintenir le bord longitudinal 316 correspondant de l'élément de jonction 315 afin d'éviter un fléchissement de cet élément de jonction 315.

En variante, on peut prévoir une pluralité de ces moyens de réception le long du bord libre de la partie fixe.

Ce moyen de réception 330 se présente sous la forme d'un manchon 330 cylindrique ouvert longitudinalement.

Chaque élément de jonction 315 comporte en correspondance une découpe qui délimite une partie cylindrique du bord longitudinal 316.

Cette partie cylindrique du bord longitudinal 316 est logée dans le manchon 330.

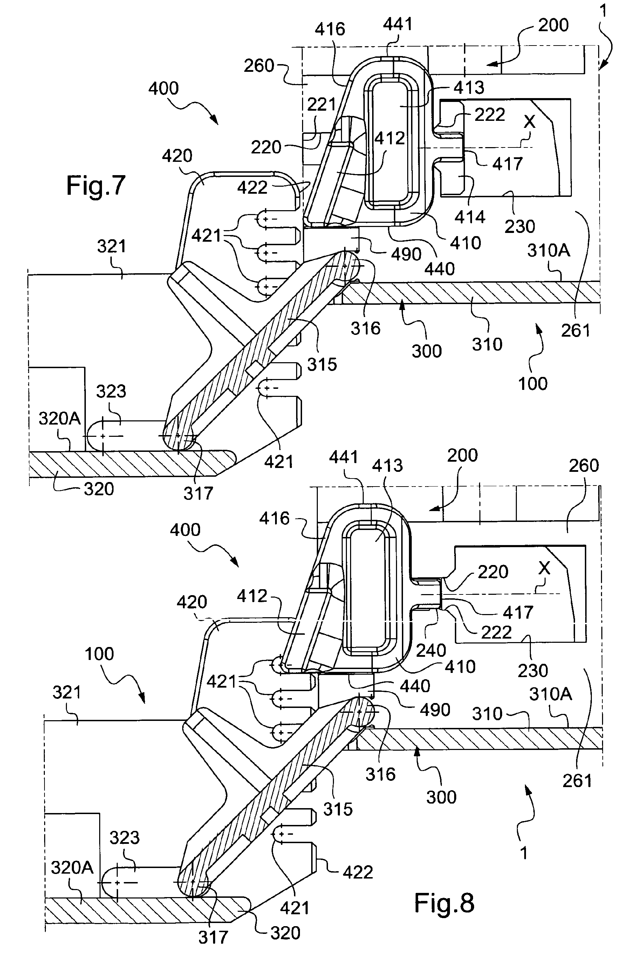

En pratique, pour faire passer la partie mobile 320 du fond 300 de sa position de fond plan (figures 5 et 6) vers sa position de retrait (figures 7 et 8), l'utilisateur appuie sur la partie de préhension 412 de chaque taquet 410 pour repousser le taquet 410 depuis sa position de blocage (figures 5, 8, 12, 14 et 16) vers sa position de libération (figures 6, 7, 11, 13, 15), en le faisant coulisser dans la fente 220 correspondante de la paroi latérale 220.

La dent 411 de chaque taquet 410 se désengage de l'encoche 421 de la languette 420 correspondante dans laquelle elle était engagée.

Le mouvement du taquet 410 est alors limité par la butée de la paroi latérale 432 de la rainure 433 ménagée dans la jambe 414B de l'élément 414 en forme de T du taquet 410.

Lorsque les quatre taquets 410 sont dans leur position de libération, la partie mobile 320 du fond 300 est libre de se déplacer en translation perpendiculairement à la partie fixe 310 du fond 300, vers l'arrière du coffret 1.

L'utilisateur peut ainsi pousser cette partie mobile 320 jusqu'à obtenir l'écart qu'il souhaite entre la partie mobile 320 du fond 300 et le bord libre de la paroi latérale 200 (figure 7).

Le mouvement de translation de la partie mobile 320 du fond 300 est alors limité par la butée des pions 318 de chaque élément de jonction 315 contre l'une des extrémités de la coulisse 323.

Lorsque la position de la partie mobile 320 est ajustée, l'utilisateur tire chaque taquet 410 pour le faire coulisser dans la fente 220 et le remettre dans sa position de blocage de la partie mobile 320 du fond 300 (figure 8).

La dent 411 du taquet 410 s'engage alors dans l'encoche 421 de la languette 420 correspondante lui faisant face.

La partie mobile 320 du fond 300 est ainsi à nouveau bloquée dans une position dans laquelle la profondeur du socle 100 du coffret 1 est localement ajustée.

La hauteur de la paroi latérale 200 est automatiquement ajustée en conséquence grâce à la présence des murets 321. Ceux-ci comblent l'écart entre la plaque rectangulaire 320A de la partie mobile 320 et le bord arrière de la paroi latérale 200.

Pour effectuer la manoeuvre inverse, l'utilisateur répète les mêmes étapes en sens inverse et tire vers le haut la partie mobile 320 du fond 300.

Le déplacement de la partie mobile 320 du fond 300 de sa position de retrait vers sa position de fond plan est alors limité par au moins deux butées 210 (figures 1, 2 et 9) qui s'étendent perpendiculairement à la paroi latérale 200, au-dessus des murets 321 de la partie mobile 320 du fond 300 et contre lesquelles le bord libre de chaque muret 321 vient en butée.

Il est prévu ici quatre butée 210 disposées à proximité des languettes 420 de la partie mobile 320 du fond 300.

L'ajustement de la position de la partie mobile 320 du fond 300 est ainsi facile et rapide. L'utilisateur peut facilement adapter la profondeur du coffret 1 à la profondeur du trou pratiqué dans la paroi de montage dans laquelle le coffret est monté, sans outils. Il peut ainsi profiter d'une plus grande profondeur pour effectuer des raccordements électriques plus facile des appareillages électriques.

Par ailleurs, les appareillages électriques peuvent être montés dans le coffret 1 sur des rails fixés de manière classique à la paroi latérale 200 du socle 100 du coffret 1.

La présente invention n'est nullement limitée aux modes de réalisation décrits et représentés mais l'homme du métier saura y apporter toute variante conforme à son esprit.

On a représenté ici un mode de réalisation selon lequel la languette dans laquelle sont formées les encoches présentent la forme d'un peigne à dents arrondies. On peut envisager de rendre les dents de ce peigne plus pointues afin de rendre plus facile l'insertion de la dent du taquet dans l'encoche correspondante.

On peut également envisager que le fond du socle du coffret ne comporte qu'une seule partie fixe. La partie mobile s'étend alors entre cette partie fixe et la partie de la paroi latérale opposée à cette partie fixe. On peut alors prévoir un unique élément de jonction entre cette partie de la paroi latérale et la partie mobile du fond.

## Revendications

1. Coffret (1) pour appareillages électriques comportant un fond (300), à partir duquel s'élève une paroi latérale (200) entourant ce fond (300), **caractérisé en ce que** ledit fond (300) comporte au moins une partie fixe (310) rattachée fixement à ladite paroi latérale (200) et une partie mobile (320) en translation selon une direction perpendiculaire à ladite partie fixe (310), entre une première position dans laquelle ladite partie mobile (320) s'étend dans le prolongement de ladite partie fixe (310) et une deuxième position dans laquelle ladite partie mobile (320) s'étend en retrait de ladite partie fixe (310).

2. Coffret (1) selon la revendication 1, dans lequel il est prévu des moyens de liaison mécanique (400) à crémaillère entre ladite partie mobile (320) et ladite paroi latérale (200).

3. Coffret (1) selon la revendication 2, dans lequel lesdits moyens de liaison mécanique (400) à crémaillère comportent au moins un taquet (410) monté mobile en translation sur ladite paroi latérale (200), parallèlement à la partie fixe (310) dudit fond (300) et une languette (420) s'élevant à partir de ladite partie mobile (320) du fond (300), perpendiculairement à celle-ci, le long de ladite paroi latérale (200), cette languette 420 comportant une pluralité d'encoches (421) disposées à différentes hauteurs par rapport à ladite partie mobile (320) et adaptées à coopérer à retenue avec une partie complémentaire (411) du taquet (410).

4. Coffret (1) selon la revendication 3, dans lequel lesdits moyens de liaison mécanique (400) à crémaillère comportent quatre languettes (420) disposées chacune dans un coin de la partie mobile (320) du fond et quatre taquets (410) disposés respectivement en regard desdites languettes (420).

5. Coffret (1) selon l'une des revendications précédentes, dans lequel il est prévu au moins un élément de jonction (315) entre la partie fixe (310) et la partie mobile (320) du fond, cet élément de jonction (315) recouvrant en permanence partiellement ladite partie mobile (320).

6. Coffret (1) selon la revendication précédente, dans lequel ledit élément de jonction (315) est monté mobile à pivotement sur la partie fixe (310) du fond (300).

7. Coffret (1) selon l'une des deux revendications précédentes, dans lequel ledit élément de jonction (315) est monté coulissant sur la partie mobile (320) du fond (300).

8. Coffret (1) selon l'une des revendications 5 à 7, dans lequel ledit élément de jonction (315) comporte une plaquette rectangulaire de forme allongée dont l'un des bords longitudinaux (316) est liée à ladite partie fixe (310) du fond (300) par un mécanisme de charnière, tandis que l'autre bord longitudinal (317) comporte des moyens de coopération (318) avec une coulisse (323) de la partie mobile (320) du fond (300).

9. Coffret (1) selon l'une des revendications précédentes, dans lequel le fond comporte deux parties fixes (310) latérales rattachées fixement à deux portions (270) opposées de ladite paroi latérale (200) et une partie mobile (320) centrale.

10. Coffret (1) selon l'une des revendications précédentes, dans lequel ladite partie mobile (320) du fond comporte le long d'au moins un de ses bords, un muret (321) plaqué contre la paroi latérale (200) du coffret (1) et dont la hauteur lui permet de couvrir l'écart maximal de hauteur entre la partie mobile (320) du fond (300) et la paroi latérale (200).
